Europäisches Patentamt

(19) European Patent Office   (11) Publication number: **0 085 557**

Office européen des brevets   **B1**

(12) **EUROPEAN PATENT SPECIFICATION**

(45) Date of publication of patent specification: **04.06.86**   (51) Int. Cl.⁴: **A 21 D 2/14, A 21 D 2/16**

(21) Application number: **83300467.4**

(22) Date of filing: **28.01.83**

(54) **Shelf-stable pastry shell and process.**

(30) Priority: **01.02.82 US 344432**

(43) Date of publication of application:
**10.08.83 Bulletin 83/32**

(45) Publication of the grant of the patent:
**04.06.86 Bulletin 86/23**

(84) Designated Contracting States:
**AT BE CH DE FR GB IT LI LU NL SE**

(56) References cited:
**FR-A-1 382 300**
**US-A-2 611 704**
**US-A-3 294 547**

**The file contains technical information
submitted after the application was filed and
not included in this specification**

(73) Proprietor: **NABISCO BRANDS INC.**
**Nabisco Brands Plaza**
**Parsippany New Jersey 07054 (US)**

(72) Inventor: **Warren, Alison B.**
**9 Williams Road**
**Chatham New Jersey 07928 (US)**
Inventor: **Hnat, Diane L.**
**44 South Main Street**
**Lodi New Jersey (US)**

(74) Representative: **Thomas, Roger Tamlyn et al**
**D. Young & Co. 10 Staple Inn**
**London WC1V 7RD (GB)**

Courier Press, Leamington Spa, England.

## Description

The present invention relates to fully-baked, shelf-stable pastry shells and to processes for preparing such pastry shells.

Desserts and main dishes prepared with the delicate, flaky texture of pastry shells have universal appeal. Unfortunately, the preparation of pastry shells is a time consuming task which requires considerable skill. Prior art workers have endeavored to make the enjoyment of foods, containing pastry shells more convenient by simplifying preparation in a number of ways. However, there remains a need for increased convenience.

According to one early attempt, Bemis in U.S. Patent 2111021 described a process and an apparatus for preparing fully-baked pie crusts. According to his procedure, upper and lower crust portions are separately formed between mated baking molds. However, because Bemis does not describe any special formulation and does not make any special provision for maintaining taste, texture or structural integrity during shipping, handling and extended periods of storage, the product would be too delicate to stand normal shipping and handling and would lose its fresh-baked flavor and fine texture over extended periods of storage.

According to another prior art attempt in preparing food products with pastry shells, Kooistra discloses in U.S. Patent 3 294 547 that a low-moisture-content dough containing essentially from about 1% to about 15% by weight glycerine, from about 10% to about 25% by weight water, about 40% to about 55% by weight flour, and about 20% to about 35% by weight shortening, with the glycerine to water ratio being from about 1:9 to about 3:2, provides a dough having good shelf stability prior to use and good handling qualities during preparation. Similarly, Jaeger discloses in U.S. Patent 2 611 704 a dry mix containing glycerine for preparing a pie crust. The glycerine is said to maintain product moisture after baking. These compositions, however, are not intended for preparing fully-baked pie crusts for shipment, and still require considerable work for their preparation.

According to another prior art approach, Ketch et al in U.S. Patent 3 492 127 discloses a non-refrigerated ready-to-bake pastry product. To achieve the ability to maintain an unbaked crust dough in contact with a normally liquid filling material, Ketch et al reduces the moisture of the filling and dough portions to an equilibrium level of less than 15% before packaging. In addition, the unbaked crust dough contains glycerine or other polyhydric alcohol to replace part of the moisture, and employs a compound capable of reducing the disulphide linkages of the gluten. One disadvantage of products of this type, is that they are either dry to taste upon eating or require rehydration prior to consumption.

According to a more recent disclosure, Munter et al in U.S. Patent 4 265 919 describe yet another procedure for producing food products containing pastry shell. A frozen, pre-prepared shell is packaged along with a food material containing a liquid component also in the frozen condition. The shell is positioned over a centrally-depressed receptacle containing the normally-liquid material by means of an outwardly and downwardly extending rim around the receptacle. To prepare the product for consumption, the combined package is heated to liquify the filling material, and the package is then inverted to permit the liquid ingredients to fill the pastry shell for final baking. While products of this type may provide a degree of convenience, they also add a degree of inconvenience by requiring cooking and the use of the particular filling with which it is packaged.

There remains a present need for a pastry shell product which provides the consumer with increased convenience but yet is of high quality and is capable of retaining that quality in terms of taste, texture and structural integrity under the normal conditions of shipping and handling, and for normal periods of storage. There also remains a need for a process capable of producing such a product.

It is an aim of at least the preferred embodiments of the invention:—

(a) to provide a fully-baked, shelf-stable pastry shell having adequate strength to withstand ordinary commercial distribution,

(b) to provide a fully-baked, pastry shell which maintains its taste and texture for commercially-reasonable periods of shelf life

(c) to provide a fully baked, shelf-stable pastry shell having structural strength to endure the normal conditions of shipping and handling, and being properly formulated to maintain its flavor and texture during a reasonable shelf life.

(d) to provide a fully-baked pastry shell which is shelf-stable, structurally strong and has the advantage that it can be used as is or in recipes which require baking.

(e) to provide a process capable of preparing a fully-baked, shelf-stable pastry shell having these desirable attributes.

In its broad aspects, the pastry shell of the invention is shelf-stable and is a fully-baked shelf-stable, undocked, continuous, pastry shell having a moisture content of less than 4%, and comprising on a dry weight basis: from 50 to 85% flour; from 10 to 45% fat, containing antioxidant in an amount effective to maintain product taste for at least six months of storage; and glycerine in an amount, up to 5%, which is effective to maintain a resilient, flaky texture for at least six months of storage. The process, in its broad aspects, comprises: preparing a dough by admixing from 5 to 20% water and from 1 to 5% glycerine with from 45 to 80% flour and from 10 to 40% fat, the normal commercial grade of flour and fat being employed with all volatile and non-volatile materials normally present being included and the fat containing antioxidant in an amount effective to maintain product taste for a period of at least six months of storage; forming the dough into a continuous sheet; positioning the continuous dough sheet within a baking pan, between the pan and a complementary form having a plurality of docking holes therein and baking the dough to form a pastry shell.

Preferred embodiments of the invention will now be described.

Products of the invention are characterized by, in addition to their increased convenience, their practical adaptability to commercial grocery product distribution in terms of strength, physical integrity, flavor retention, and texture retention. To provide a degree of objectivity in defining these terms, storage tests to determine retention of the various properties over periods of time will be determined after storage for the indicated times at a temperature of 75°F (24°C). The products of this invention will retain each of the significant attributes for a period of at least six months. Preferably, the products will maintain the desirable attributes for at least nine months of storage. While the overall flavor of the product should be maintained, one critical aspect of flavor is the lack of rancidity, which is the oxidation of the oil or fat in the product manifesting itself in a fishy, paint-like or musty aroma, depending on the chemicals used in the oil.

It is also necessary in defining the compositions of the invention at various stages of processing to identify the bases for determining the percentage figures. Unless otherwise indicated, all parts and percentages will be based on the weight of the component as a part of the total composition at that particular stage of processing, unless otherwise identified. At points within the disclosure, the composition will be defined in terms of percentages on an "as is" weight basis and at other points, the composition must necessarily be defined in terms of "dry solids content". By the term "as is", it is meant that the normal commercial grade of ingredient is employed along with all volatile and non-volatile materials normally present. On the other hand, the term "dry weight" is meant to define the weight of the component only in terms of a totally dry product having all non-chemically combined water and other volatile materials removed. For example, soft winter wheat flour will typically contain from 10 to 14% moisture, and this moisture content will be included in the statement of the "as is" weight; however, the weight of the same flour component on a "dry weight" basis will be reduced from the "as is" weight due to the elimination of the moisture.

The flour component employed according to the present invention can be derived from any suitable farinaceous source including wheat, oat, and rye, as well as other sources which are commercially available and typically employed for pastry shells. The selection of a particular type of flour will have an effect upon the ultimate product characteristics; however, the use of any particular source is not believed critical for purposes of processing or achieving the advantages of the invention. Thus, while it is preferred to employ a flour milled from soft, white winter wheat, which typically has a protein content of 7.5 to 8.5% and a moisture content of up to 14%, flours from hard wheat containing protein contents substantially higher than this can be employed as the sole flour component or can be employed along with other flours having lower protein contents or even starches to achieve the textural attributes which may be desired for a particular product application. Most typically, the soft, white winter wheat will be a patent grade flour which is unbleached, unenriched and non-brominated. Preferably, it will exhibit a viscosity (AACC Method 56-8) of 30 to 40° MacMichael, and a Hagberg falling number (AACC Method 56-81B) of at least 335.

Similarly, the fat employed in preparing the dough can be selected from a wide variety of commercially available triglyceride materials. The fat can be selected from either the liquid or plastic-type shortenings derived from vegetable oils such as soybeam or cottonseed oil and from animal fats such as lard. Examples of suitable shortenings are disclosed in U.S. Patent 2611704, U.S. Patent 2815286, U.S. Patent 2442537 and U.S. Patent 2801177. One particularly preferred, specially-formulated fat will comprise partially hydrogenated soybeam oil containing minor amounts of an emulsifier such as glyceryl monooleate and an antioxidant combination comprising butylated hydroxyanisole (BHA), tertiarybutyl-hydroquinone (TBHQ) and citric acid. The antioxidant system is composed of 28% butylated hydroxyanisole, 12% tertiary butylhydroquinone, 6% citric acid, 20% glyceryl monooleate and 34% propylene glycol. This blend is used at 0.05% of the weight of the fat. One especially preferred partially hydrogenated soybean will have a Wiley melting point of from 95°F (35°C) to 99°F (37°C), a maximum iodine value of 76, and a solid fat index of 50°F (10°C) of from 34 to 43 and at 92°F (33°C) of from 3 to 8. Other hydrogenated and non-hydrogenated fats can of course be employed; however, it is preferred to employ those which are partially hydrogenated to achieve a Wiley melting point of at least 90°F (32°C) and an iodine value of no higher than 90. Liquid oils and those which are not hydrogenated to the preferred degree, will be more difficult to stabilize in terms of flavor over extended periods of storage.

The total composition is formulated to provide a dough having typically good working capabilities; formed into a sheet; positioned as a continuous sheet, without docking, within a baking pan and between the pan and a complementary form having a plurality of docking holes therein for baking. As will be apparent later, baking the sheet without docking it is important to achieving the greatest strength in the final pastry shell.

In preparing the dough, the fat will preferably be creamed, such as by mixing under conditions effective to assure that all lumps are broken up. According to one preferred embodiment, the fat is creamed in an Artofex mixer for about two minutes at a temperature in the range of from 70°F (21°C) to 75°F (24°C). After creaming, the flour component will be added to the fat and mixed for a period of time sufficient to provide a uniform blend, but being careful to avoid overmixing. According to one preferred procedure, the flour is added at a temperature of within the range of from 60°F (16°C) to 65°F (18°C) and blended with the fat for about six minutes.

After the admixture of the fat and flour has been prepared, it is then admixed with an aqueous solution containing glycerine, water, and any other water soluble or dispersible components of the dough. In addition to the glycerine and water, the composition will preferably contain from 0.5% to 2% salt and effective amounts of coloring and flavoring for the desired taste and appearance of the product. The dough at this stage in preparation will comprise from 5 to 25% water and from 1% to 5% flour and from 10 to 40% fat. The fat will contain antioxidant in an amount effective to maintain product taste for a period of at least six months of storage at a temperature of 75°F (24°C). And, the amount of glycerine will be selected to be effective to provide and maintain a flaky, resilient texture for a period of at least six months of storage at 75°F (24°C). Preferably, the antioxidant and the glycerine levels will be adequate to provide retention of the indicated properties for at least nine months of storage at the indicated conditions. More preferred final dough compositions will contain from 10 to 15% water and from 2 to 3% glycerine with, on an as is weight basis, from 55 to 65% flour and from 20 to 30% fat. Also preferably, the composition will contain from about 0.5 to about 2.0% sodium chloride. If desired sugar, flavors, color, and the like can also be employed.

The combined mixture of dough ingredients is blended under conditions effective to provide the consistency typically desired for shaping and forming conventional pastry doughs. Typically, the complete dough admixture will be blended for about three minutes in a suitable mixer, such as an Artofex double arm mixer having a revolving mixing bowl.

On completion of the dough preparation, the dough is fed to suitable crust forming equipment wherein it is divided into suitably sized portions and then sheeted to the size required. Typical of the equipment that can be employed is the Colborne crust forming equipment which typically shapes the dough into rectangular blocks of desired weight and then feeds the individual blocks into a system of cross-sheeting rolls to form individual dough sheets of suitable size and having substantially continuous surfaces. Equipment of this type is typically capable of automatically depositing continuous dough sheets of this type into suitable baking pans. The baking pans can be of metal foil, such as aluminum foil, or they can be of ovenable paper or plastic materials. The top edge of the dough sheets can be crimped and fluted as desired.

It is important to provide the dough sheets as continuous sheets in the sense that they are undocked and otherwise free of surface imperfections. While docking is conventionally thought to be necessary to provide areas for escape of water vapor generated during baking, it has been determined according to the invention that the perforations resulting from the docking create structural weaknesses within the shell which will cause ultimate failure during shipping and handling. Thus, according to the present invention, it is important to obtain a continuous dough sheet through forming and baking. By "continuous sheet" it is meant that the surface is not docked, such as by perforating along the sides or the bottom as is conventional in the art, and the surface has no significant cracks or cuts.

After placing the continuous dough sheet within a pan or other suitable device for baking, the dough sheet is overlayed with a complementary form having a plurality of docking holes therein. The complementary form will be of sufficient weight to maintain the sheet in substantially close conformity with the sides of the pan during baking and prevent significant shrinkage. Additionally, the form will have a sufficient number of suitably-sized docking holes to permit the release of steam during baking. Typically the form will be constructed of cold rolled steel coated with electro-deposited, remelted pure tin and then overcoated with Teflon polytetrafluoroethylene, and will have circular-shaped 3/32 inch (0.24 cm) holes spaced at intervals of approximately 1 inch (2.54 cm) about the bottom and the side surface.

After suitably positioning the continuous dough sheet within a baking pan, between the pan and a complementary form having a plurality of docking holes therein, the sheet is then baked to a moisture content of less than about 4%. Typically, baking is accomplished on a continuous plate oven or other suitable baking oven to a moisture content of from 1.5 to 3.5%. The temperature will be selected, based upon the formulation of the dough, on the details of construction of the pan and the complementary form, and the particular geometry of the oven to provide complete baking within a practical period of time. Typical baking temperatures will be within the range of from 400°F (204°C) to 440°F (227°C). If desired, heat can be supplied by gas jet burners located over the top of the product as well as from the bottom. Typical baking times under these conditions employing preferred formulations will be on the order of about 14 to about 18 minutes.

After baking, the product is discharged from the oven and is preferably cooled to a temperature adequate for packaging. It is preferred to employ pans constructed of crimped aluminum sheet having a thickness of about 0.0045 inch (0.01 cm) which are maintained with the product during distribution. The complementary forms are removed, preferably prior to cooling the product.

These forms are themselves cooled and recycled for further baking operations.

Baking reduces the moisture content of the product to less than 4%, and preferably to within the range of from 1.5 to 3.5%, most preferably about 2.0%. Thus, the composition of the final product on a dry weight basis will be from 50 to 85% flour, from 10 to 45% fat, and glycerine in an amount up to 5%. Preferably, the pastry shell will comprise on this basis from 60 to 75% flour and from 20 to 40% fat. Also according to the preferred embodiment the glycerine will be present at a level of 2 to 3% and, the ratio of the combined weight of fat and glycerine to the flour component will be 0.4—0.5:1.

After cooling to a suitable temperature, on the order of 100°F (38°C) or less, the baked pastry shells are packaged in a manner capable of supporting the shells during transit so that the advantages achieved according to the present invention by providing a structurally strong, resilient, and yet flaky product are realized to their fullest extent. One preferred form of packaging comprises individual paperboard cartons surrounding individual pastry shells held within their aluminum baking pans, with a plurality of these cartons being stacked one upon the other, encased within a liner comprising polyethylene or other high polymer film material and placed with a corrugated shipping carton with several layers of a low density crimped paper cushioning layer positioned between the liner and the carton. Pastry shells packaged in this manner show extremely good tolerance to the normal abuses to which they are subjected in shipping and handling.

The fully-baked pastry shell can be employed for the preparation of either hot or cold main dishes or desserts. These products can be prepared by adding either hot or cold filling materials containing sauces, puddings, fruits, vegetables, meats and the like for either eating as is or after cooking. It is an advantage of the present invention that the prebaked pastry shell can accommodate both uncooked cold fillings as well as fillings which require full cooking for usual periods of time after placement in the shells.

The following example is present for the purpose of further illustrating and explaining the present invention and is not to be taken as limiting in any regard.

Example

A pastry crust according to the invention is prepared from the following ingredients

| Ingredients | Parts |
| --- | --- |
| Soft white winter wheat flour | 62.8 |
| Partially hydrogenated soybean oil containing glyceryl mono-oleate emulsifier and 0.5% of an antioxidant composition comprising BHA, TBHQ and citric acid (Iodine value=76) | 20.9 |
| Water | 12.43 |
| Glycerine, USP 96% | 2.63 |
| Sodium chloride | 1.23 |
| Annatto color | .01 |

After weighing out the ingredients, the shortening is creamed at 70°—75°F (21°—24°C) in an Artofex mixer for about two minutes. The flour, at 60°—65°F (16°—18°C), is then added and blended with the fat for about six minutes, taking precaution to avoid over-mixing. In a separate vessel, water at 40°F (4.5°C), is combined with the salt, annatto coloring and glycerol. The blend of flour and fat is then mixed with the resulting aqueous solution prepared above and mixed for three minutes on the Artofex until the dough is uniform and wetted.

After mixing, the dough is processed on Colborne semi-automatic pie production equipment which processes the dough at a temperature of 60°F (16°C) to 65°F (18°C). Individual balls of dough weighing from 8 to 9 ounces, (0.23 to 0.25 Kg) each are delivered to crust rollers where they are cross-rolled to form continuous individual dough sheets. The individual dough sheets are then deposited over individual moving aluminum pie pans. Each pan in this example is made from aluminum foil, having a thickness of 0.0045 inch (0.01 cm), by crimping the side portions to form a pan having an 8 and 5/8 inch (22 cm) top inside diameter and a depth of 1 and 3/8 inches (3.5 cm). The shell is then formed within the pan by means of rollers and the top outer crust edge is trimmed and fluted. The inner surface of the shell is then lightly adjusted with flour to prevent sticking. A form having a shape complementary to that of the pan is then placed on top of the formed dough sheet. The form has a plurality of 3/32 inch (0.24 cm) diameter round docking holes with spacing of about 1 inch (2.54 cm) positioned in the side and bottom walls of the form to permit escape of water vapor during baking. The shells are then baked to a moisture content of 2% to 3% at 440°F (227°C) for about 16 minutes.

**Claims**

1. A fully baked, shelf-stable, undocked, continuous, pastry shell having a moisture content of less than 4%, and comprising on a dry weight basis: from 50 to 85% flour; from 10 to 45% fat, containing antioxidant in an amount effective to maintain product taste for at least six months of storage; and glycerine in an amount up to 5%, which is effective to maintain a resilient, flaky texture for at least six months storage.

2. A pastry shell according to claim 1 which comprises from 60 to 75% flour and from 20 to 40% fat.

3. A pastry shell according to claim 1 or 2 which further comprises from 0.5 to 2.0% salt.

4. A pastry shell according to any preceding claim wherein the flour is soft, white winter wheat flour.

5. A pastry shell according to any preceding claim wherein the fat comprises a partially hydrogenated triglyceride having a Wiley melting point of above 90°F (32°C).

6. A pastry shell according to any preceding claim wherein the antioxidant comprises a combination of butylated hydroxyanisole, tertiary-butylhydroquinone and citric acid in an amount of about 0.05%, based upon the weight of the fat.

7. A pastry shell according to any preceding claim wherein the glycerine content is from 2 to 3%.

8. A pastry shell according to claim 7 wherein the flour is present in an amount from 60 to 75%, and the fat is present in an amount from 25 to 35%.

9. A pastry shell according to claim 8 wherein the ratio of fat and glycerine:flour is in the range 0.4—0.5:1.

10. A process for preparing a fully-baked shelf-stable pastry shell having a moisture content of less than 4%, which comprises: preparing a dough by admixing from 5 to 20% water and from 1 to 5% glycerine with, from 45 to 80% flour and from 10 to 40% fat, the normal commercial grade of flour and fat being employed with all volatile and non-volatile materials normally present being included and the fat containing antioxidant in an amount effective to maintain product taste for a period of at least six months of storage; forming the dough into a continuous sheet; positioning the continuous dough sheet within a baking pan, between the pan and a complementary form having a plurality of docking holes therein; and baking the dough to form a pastry shell.

11. A process according to claim 10 wherein the fat is creamed prior to adding the flour thereto, and the flour and fat are admixed prior to adding a solution of glycerol and water.

12. A process according to claim 11 wherein the amount of water is from 10 to 15%, the amount of flour is from 55 to 65%, and the amount of fat is from 20 to 30%, all percentages based upon the weight of the total composition.

13. A process according to claim 12 wherein the ratio of fat plus glycerol to flour is within the range 0.4—0.5:1.

14. A process according to any one of claims 10—13 wherein the fat comprises a partially hydrogenated triglyceride having a Wiley melting point of above 90°F (32°C).

15. A process according to any one of claims 10—14 wherein the antioxidant comprises a combination of butylated hydroxyanisole tertiary-butylhydroquinone and citric acid in an amount of about 0.05% based on the weight of the fat.

**Patentansprüche**

1. Eine fertiggebackene, lagerbeständige, geschlossene, durchgehende, Gebäckhülle mit einem Feuchtigkeitsgehalt von weniger als 4%, die auf einer Trockengewichtsbasis enthält: 50 bis 85% Mehl; 10 bis 45% Fett, das Antioxidans in einer Menge enthält, die die Aufrechterhaltung des Geschmackes des Produktes über mindestens 6 Monate Lagerung bewirkt; und Glycerin in einer Menge bis zu 5%, die die Aufrechterhaltung einer weichen, flockigen Beschaffenheit über mindestens 6 Monate Lagerung bewirkt.

2. Eine Gebäckhülle nach Anspruch 1, die 60 bis 75% Mehl und 20 bis 40% Fett enthält.

3. Eine Gebäckhülle nach Anspruch 1 oder 2, die weiters 0,5 bis 2,0% Salz enthält.

4. Eine Gebäckhülle nach einem der vorhergehenden Ansprüche, dadurch gekennzeichnet, daß das Mehl glattes, weißes Winterweizenmehl ist.

5. Eine Gebäckhülle nach einem der vorhergehenden Ansprüche, dadurch gekennzeichnet, daß das Fett ein teilweise hydriertes Triglycerid mit einem Wiley-Schmelzpunkt von mehr als 90°F (32°C) ist.

6. Ein Gebäckhülle nach einem der vorhergehenden Ansprüche, dadurch gekennzeichnet, daß das Antioxidans eine Kombination von butyliertem Hydroxyanisol, tertiär-Butylhydrochinon und Zitronensäure in einer Menge von ungefähr 0,05% auf der Basis des Fettgewichtes, enthält.

7. Eine Gebäckhülle nach einem der vorhergehenden Ansprüche, dadurch gekennzeichnet, daß der Glyceringehalt 2 bis 3% beträgt.

8. Eine Gebäckhülle nach Anspruch 7, dadurch gekennzeichnet, daß das Mehl in einer Menge von 60 bis 75% und das Fett in einer Menge von 25 bis 35% enthalten ist.

9. Eine Gebäckhülle nach Anspruch 8, dadurch gekennzeichnet, daß das Verhältnis von Fett und Glycerin:Mehl im Bereich von 0,4—0,5:1 liegt.

10. Ein Verfahren zur Herstellung einer fertiggebackenen, lagerbeständigen Gebäckhülle mit einem Feuchtigkeitsgehalt von weniger als 4%, das umfaßt:

Herstellen eines Teiges durch Mischen von 5 bis 20% Wasser und 1 bis 5% Glycerin mit 45 bis 80% Mehl und 10 bis 40% Fett, wobei die handelsübliche Qualität von Mehl und Fett verwendet wird, die alle normalerweise darin vorhandenen flüchtigen und nichtflüchtigen Stoffe enthält, und das Fett Antioxidans in einer Menge enthält, die die Aufrechterhaltung des Geschmackes des Produkts über mindestens 6 Monate Lagerung bewirkt; Formen des Teiges zu einem durchgehenden Blatt; Einfüllen des durchgehenden Teigblattes in eine Backform, zwischen die Form und eine Zusatzform mit einer Vielzahl von Perforierungen; und Backen des Teiges zu einer Gebäckhülle.

11. Ein Verfahren nach Anspruch 10, dadurch gekennzeichnet, daß das Fett vor Zugabe des Mehls schaumig geschlagen wird, und Mehl und Fett vor Zugabe einer Lösung von Glycerin und Wasser beigemischt werden.

12. Ein Verfahren nach Anspruch 11, dadurch gekennzeichnet, daß die Wassermenge 10 bis 15%, die Mehlmenge 55 bis 65%, und die Fettmenge 20 bis 30% beträgt, alle Prozente auf der Basis des Gewichtes der gesamten Zusammensetzung.

13. Ein Verfahren nach Anspruch 12, dadurch gekennzeichnet, daß das Verhältnis von Fett plus Glycerin zu Mehl im Bereich von 0,4—0,5:1 liegt.

14. Ein Verfahren nach einem der Ansprüche 10 bis 13, dadurch gekennzeichnet, daß das Fett ein teilweise hydriertes Triglycerid mit einem Wiley-Schmelzpunkt von mehr als 90°F (32°C) enthält.

15. Ein Verfahren nach einem der Ansprüche 10 bis 14, dadurch gekennzeichnet, daß das Antioxidans eine Kombination von butyliertem Hydroxyanisol, tertiär-Butylhydrochinon und Zitronensäure in einer Menge von ungefähr 0,05% auf der Basis der Fettgewichtes, enthält.

**Revendications**

1. Une croûte pour pâtisserie continue non perforée stable au stockage et entièrement cuite ayant une teneur en humidité inférieure à 4% et comprenant en poids sec: de 50 à 85% de farine; de 10 à 45% de graisse contenant un anti-oxydant en une quantité efficace pour conserver la saveur du produit pendant au moins 6 mois de stockage; et de la glycérine en une quantité d'au plus 5% qui est efficace pour maintenir une texture élastique et feuilletée pendant au moins 6 mois de stockage.

2. Une croûte pour pâtisserie selon la revendication 1 qui comprend de 60 à 75% de farine et de 20 à 40% de graisse.

3. Une croûte pour pâtisserie selon la revendication 1 ou 2 qui comprend de plus de 0,5 à 2,0% de sel.

4. Une croûte pour pâtisserie selon l'une quelconque des revendications précédentes dans laquelle la farine est de la farine blanche de blé d'hiver tendre.

5. Une croûte pour pâtisserie selon l'une quelconque des revendications précédentes dans laquelle la graisse comprend un triglycéride partiellement hydrogéné ayant un point de fusion Wiley supérieur à 90°F (32°C).

6. Une croûte pour pâtisserie selon l'une quelconque des revendications précédentes dans laquelle l'antioxydant comprend une combinaison d'hydroxyanisole butylé, de tert-butylhydroquinone et d'acide citrique en une quantité d'environ 0,05% par rapport au poids de la graisse.

7. Une croûte pour pâtisserie selon l'une quelconque des revendications précédentes dans laquelle la teneur en glycérine est de 2 à 3%.

8. Une croûte pour pâtisserie selon la revendication 7 dans laquelle la farine est présente en une quantité de 60 à 75% et la graisse est présente en une quantité de 25 à 35%.

9. Une croûte pour pâtisserie selon la revendication 8 dans laquelle le rapport de la graisse et de la glycérine à la farine est donc la gamme de 0,4—0,5:1.

10. Un procédé pour préparer une croûte pour pâtisserie stable au stockage et entièrement cuite ayant une teneur en humidité inférieure à 4% qui comprend: la préparation d'une pâte par mélange de 5 à 20% d'eau et 1 à 5% de glycérine avec 45 à 80% de farine et 10 à 40% de graisse, la qualité commerciale normale de la farine et de la graisse étant employée avec présence de toutes les matière volatiles et non volatiles normales et la graisse contenant un antioxydant en une quantité efficace pour conserver la saveur du produit pendant une période d'au moins 6 mois de stockage; le façonnage de la pâte en une feuille continue; la mise en place de la feuille de pâte continue dans un plat de cuisson et une forme complémentaire ayant plusieurs trous de perforation; et la cuisson de la pâte pour former une croûte pour pâtisserie.

11. Un procédé selon la revendication 10, dans lequel la graisse est battue en crème avant l'addition de la farine et la farine et la graisse sont mélangées avant l'addition d'une solution du glycérol et de l'eau.

12. Un procédé selon la revendication 11 dans lequel la quantité d'eau est de 10 à 15%, la quantité de farine est de 55 à 65% et la quantité de graisse est de 20 à 30%, tous les pourcentages étant exprimés par rapport au poids de la composition totale.

13. Un procédé selon la revendication 12 dans lequel le rapport de la graisse et du glycérol à la farine est dans la gamme de 0,4—0,5:1.

14. Un procédé selon l'une quelconque des revendications 10 à 13 dans lequel la graisse comprend un triglycéride partiellement hydrogéné ayant un point de fusion Wiley supérieur à 90°F (32°C).

15. Un procédé selon l'une quelconque des revendications 10 à 14 dans lequel l'antioxydant comprend une combinaison d'hydroxyanisole butylé, de tert-butylhydroquinone et d'acide citrique en une quantité d'environ 0,05% par rapport au poids de la graisse.